# EUROPÄISCHE PATENTSCHRIFT

(11) **EP 3 416 016 B1**
(45) Veröffentlichungstag und Bekanntmachung des Hinweises auf die Patenterteilung: **17.02.2021**
(21) Anmeldenummer: 18173828.7
(22) Anmeldetag: 23.05.2018
(51) Int. Cl.: G05D 1/02, B62D 15/02, G01S 7/52, G08G 1/14

(54) **VERFAHREN ZUM UNTERSTÜTZEN EINES MANÖVRIERVORGANGES EINES KRAFTFAHRZEUGS UND SYSTEM ZUM UNTERSTÜTZEN EINES MANÖVRIERVORGANGES EINES KRAFTFAHRZEUGS**
METHOD FOR SUPPORTING A MANOEUVRE OF A MOTOR VEHICLE AND SYSTEM FOR SUPPORTING A MANOEUVRE OF A MOTOR VEHICLE
PROCÉDÉ D'AIDE À UN PROCESSUS DE MANOEUVRE D'UN VÉHICULE À MOTEUR ET SYSTÈME DE SUPPORT D'UN PROCESSUS DE MANOEUVRE D'UN VÉHICULE À MOTEUR

(30) Priorität: 16.06.2017 DE 102017210109
(43) Veröffentlichungstag der Anmeldung: 19.12.2018
(73) Patentinhaber: VOLKSWAGEN AKTIENGESELLSCHAFT, 38440 Wolfsburg (DE)
(72) Erfinder: Günzel, Thorben, 38118 Braunschweig (DE); Mossau, Daniel, 38448 Wolfsburg (DE); Ernesti, Tilo, 38126 Braunschweig (DE)

(56) Entgegenhaltungen:
- WO-A1-2015/062769
- DE-A1-102013 219 680
- DE-A1-102015 106 934

## Beschreibung

Die Erfindung betrifft ein Verfahren zum Unterstützen eines Manövriervorganges eines Kraftfahrzeugs in einem Parkhaus. Während des Manövriervorgangs bewegt sich das Kraftfahrzeug innerhalb des Parkhauses von einer Abgabestelle zu einer vorbestimmten Position im Parkhaus. Der Manövriervorgang des Kraftfahrzeugs wird durch zumindest einen Sensor des Kraftfahrzeugs überwacht. Die Erfindung betrifft auch ein System zum Unterstützen eines Manövriervorganges eines Kraftfahrzeugs.

Eine Vielzahl von Fahrerassistenzsystemen verwendet Sensoren, insbesondere Ultraschallsensoren, zur Ermittlung von Abständen von dem Kraftfahrzeug zu Objekten in einer Umgebung des Kraftfahrzeugs. Bei den Fahrerassistenzsystemen handelt es sich beispielsweise um eine Einparkhilfe und/oder einen Parklenkassistenten.

Aus dem allgemeinen Stand der Technik ist es bekannt, dass Ultraschallsensoren nach dem Echolotprinzip arbeiten. Dabei senden die Ultraschallsensoren kurze Ultraschallimpulse aus, welche an den Objekten in der Umgebung des Kraftfahrzeugs reflektiert werden. Nach dem Sendevorgang des Ultraschallimpulses empfangen die Ultraschallsensoren wiederum die reflektierten Signale beziehungsweise Ultraschallimpulse. Typischerweise werden die Ultraschallsensoren sowohl zum Senden als auch zum Empfangen der Ultraschallimpulse verwendet. Anhand der Laufzeit zwischen dem Senden des Ultraschallimpulses und dem Empfangen des reflektierten Ultraschallimpulses und der Schallgeschwindigkeit des Ultraschallimpulses in Luft werden durch den Ultraschallsensor, insbesondere durch ein Steuergerät des Ultraschallsensors oder des Kraftfahrzeugs, die Abstände von dem Kraftfahrzeug zu dem Objekt ermittelt. Die Schallgeschwindigkeit ist dabei eine von der Temperatur abhängige Größe. Daher ist es für eine genaue Abstandsmessung mittels des Ultraschallsensors wichtig, die Temperatur in der Umgebung des Kraftfahrzeugs zu kennen.

Aus dem allgemeinen Stand der Technik ist es bekannt, dass Kraftfahrzeuge selbst über einen Temperatursensor oder einen Temperaturfühler verfügen, mittels welchem der Ultraschallsensor einstellbar ist. Die Problematik an dem fahrzeugseitig montierten Temperaturfühler besteht darin, dass gerade bei Übergängen von Bereichen mit einer hohen Umgebungstemperatur zu einer niedrigen Umgebungstemperatur oder umgekehrt oder bei hohen Temperaturen des Motors des Kraftfahrzeugs der Temperaturfühler sich erst einpendeln muss, um die Temperatur in der Umgebung zuverlässig zu erfassen, oder, gerade bei hohen Motortemperaturen, falsche Messergebnisse liefert.

Um die Anpassung des Ultraschallsensors von dem Temperaturfühler zu entkoppeln, schlagen die DE 10 2015 106 934 A1 und die DE 10 2013 219 680 A1 Systeme vor, bei denen der Ultraschallsensor auf Basis von Temperaturdaten angepasst wird, welche zusätzlich zu den von dem Temperartursensor erfassten Daten von einer fahrzeugexternen Wetterdatenbank bezogen werden. Der Nachteil derartiger Systeme besteht darin, dass die in den Datenbanken gespeicherten Datensätze ungenau und nicht kurzzeitig, insbesondere bei einem schnellen Temperaturumschwung, anpassbar sind.

In der WO 2015 062 769 A1 ist ein Parkraumverwaltungssystem beschrieben. Das Parkraumverwaltungssystem weist eine Recheneinheit und Mittel zum Bereitstellen jeweils einer Kommunikationsverbindung zwischen dem Parkraumverwaltungssystem und einem Fahrzeug und dem Parkraumverwaltungssystem und einem Mobilgerät auf. Einem Benutzer können damit über die Kommunikationsverbindung Positionsdaten eines zugewiesenen Parkplatzes übermittelt werden. Ferner ist das Parkraumverwaltungssystem dazu eingerichtet, auf eine Abholanfrage von dem Mobilgerät mittels der Kommunikationsverbindung zu einem Startzeitpunkt einen Ausparkvorgang einzuleiten, bei dem sich das Fahrzeug autonom zu einer vorgegebenen Abholposition bewegt.

Aufgabe der vorliegenden Erfindung ist es daher, ein Verfahren und ein System zum Unterstützen eines Manövriervorganges eines Kraftfahrzeugs, insbesondere hinsichtlich der Zuverlässigkeit des zumindest einen Sensors des Kraftfahrzeugs, zu verbessern.

Diese Aufgabe wird durch ein Verfahren zum Unterstützen eines Manövriervorganges eines Kraftfahrzeugs sowie durch ein zugehöriges System mit den Merkmalen der unabhängigen Patentansprüche gelöst. Vorteilhafte Ausgestaltungen mit zweckmäßigen und nicht trivialen Weiterbildungen der Erfindung sind in den abhängigen Patentansprüchen angegeben.

Bei dem Verfahren zum Unterstützen eines Manövriervorganges eines Kraftfahrzeugs in einem Parkhaus bewegt sich das Kraftfahrzeug innerhalb des Parkhauses während des Manövriervorganges von einer Abgabestelle des Parkhauses zu einer vorbestimmten Position im Parkhaus. Mit "Manövriervorgang" ist bevorzugt ein Parkvorgang des Kraftfahrzeugs, insbesondere ein Einparkvorgang und/oder ein Ausparkvorgang, und/oder ein Rangiervorgang des Kraftfahrzeugs gemeint. Während des Manövriervorganges kann sich das Kraftfahrzeug autonom oder vollautomatisch oder teilautonom von der Abgabestelle zu der vorbestimmten Position bewegen. Alternativ kann es auch vorgesehen sein, dass ein Fahrer des Kraftfahrzeugs das Kraftfahrzeug von der Abgabestelle zu der vorbestimmten Position bewegt. Mit anderen Worten kann das Kraftfahrzeug durch den Fahrer manuell manövriert werden. Beispielsweise kann der Fahrer als manuellen Manövriervorgang einen manuellen Parkvorgang oder einen manuellen Rangiervorgang durchführen.

Bei der "Abgabestelle" handelt es sich bevorzugt um eine Position, an der ein Fahrer des Kraftfahrzeugs das Kraftfahrzeug abgestellt hat oder aus dem Kraftfahrzeug ausgestiegen ist. Wenn der Fahrer des Kraftfahrzeugs den Manövriervorgang mit dem Kraftfahrzeug durchführt, kann die "Abgabestelle" auch eine Position sein, von der aus der Fahrer das Kraftfahrzeug zu der vorbestimmten Position lenkt oder fährt. Bei der "vorbestimmten Position" handelt es sich insbesondere um eine Parklücke oder einen Stellplatz. Alternativ kann es auch vorgesehen sein, dass es sich bei der "Abgabestelle" um eine vorbestimmte Parkposition oder um eine Parklücke oder um einen Stellplatz im Parkhaus handelt. Bei der "vorbestimmten Position" kann es sich dann um eine von der Abgabestelle verschiedene Position im Parkhaus, wie beispielsweise einen Einladebereich oder einen Ausladebereich oder eine weitere Parkposition oder eine Position, an welcher der Fahrer des Kraftfahrzeugs wieder dem Kraftfahrzeug zusteigt, oder eine Ladeposition, an der sich eine Ladestation für das Kraftfahrzeug befindet, handeln.

Während des Manövriervorganges des Kraftfahrzeugs wird das Kraftfahrzeug durch zumindest einen Sensor des Kraftfahrzeugs überwacht. Das Kraftfahrzeug kann auch mehr als einen Sensor, also mehrere Sensoren, aufweisen. Bei dem zumindest einen Sensor des Kraftfahrzeugs zum Überwachen des Manövriervorganges handelt es sich bevorzugt um einen Ultraschallsensor. Durch den zumindest einen Sensor kann sichergestellt werden, dass das Kraftfahrzeug sich sicher innerhalb des Parkhauses bewegen kann.

Bei dem Verfahren wird eine Kommunikationsverbindung zwischen einer Steuereinheit des Kraftfahrzeugs und einer fahrzeugexternen Einheit des Parkhauses aufgebaut. Bei der fahrzeugexternen Einheit kann es sich beispielsweise um eine Servereinrichtung handeln. Die Steuereinheit des Kraftfahrzeugs und/oder der zumindest eine Sensor des Kraftfahrzeugs können dabei Teil oder Bestandteil eines Fahrerassistenzsystems des Kraftfahrzeugs sein. Bei der "Kommunikationsverbindung" handelt es sich bevorzugt um eine drahtlose Verbindung, über welche die Steuereinheit des Kraftfahrzeugs mit der fahrzeugexternen Einheit des Parkhauses kommunizieren kann, insbesondere Daten austauschen oder übermitteln kann. Besonders bevorzugt handelt es sich bei der Kommunikationsverbindung um eine WLAN-Verbindung, also ein Wireless Local Area Network oder ein drahtloses lokales Netzwerk.

In einem weiteren Verfahrensschritt werden klimaspezifische Messdaten, welche durch zumindest eine Messstelle des Parkhauses erfasst werden, von der zumindest einen Messstelle an die fahrzeugexterne Einheit übertragen. Mit "klimaspezifischen Messdaten" sind bevorzugt Klimadaten, wie beispielsweise eine Temperatur und/oder eine Luftfeuchtigkeit, insbesondere in einer Umgebung des Kraftfahrzeugs, gemeint. Zum Erfassen der Temperatur kann die zumindest eine Messstelle ein Temperarturmessgerät, wie beispielsweise ein Thermometer, aufweisen. Zum Erfassen der Luftfeuchtigkeit kann die zumindest eine Messstelle ein Feuchtigkeitsmessgerät, wie beispielsweise ein Hygrometer, aufweisen. Durch derartige Geräte kann die Messstelle auf besonders einfache und zuverlässige Art und Weise klimaspezifische Messdaten bereitstellen.

Schließlich wird der zumindest eine Sensor des Kraftfahrzeugs in Abhängigkeit von den klimaspezifischen Messdaten kalibriert. Mit anderen Worten kann der zumindest eine Sensor des Kraftfahrzeugs in Abhängigkeit von den klimaspezifischen Messdaten eingestellt oder angepasst oder justiert werden. Der Erfindung liegt die Erkenntnis zugrunde, dass, insbesondere bei einem Ultraschallsensor, der Schalldruck des reflektierten Ultraschallimpulses erst ab einer gewissen oder vorbestimmten Stärke des Signals nach der Reflexion erfasst wird. Um das Signal zuverlässig erfassen zu können, ist der zumindest eine Sensor bei hohen Temperaturen empfindlicher zu stellen als bei niedrigen Temperaturen. Beim Kalibrieren des zumindest einen Sensors kann eine Empfindlichkeit des Sensors, insbesondere eine Empfangsempfindlichkeit des zumindest einen Sensors und/oder zumindest ein Parameter des Sensors, insbesondere ein Sendeschalldruck des Sensors und/oder einen Wert einer Schallgeschwindigkeit, angepasst werden.

Durch die parkhausseitige Anordnung der zumindest einen Messstelle können vor Ort für den Manövriervorgang des Kraftfahrzeugs innerhalb des Parkhauses besonders zuverlässig klimaspezifische Messdaten erfasst werden und dadurch der zumindest eine Sensor des Kraftfahrzeugs, welcher den Manövriervorgang überwacht oder unterstützt, besonders genau eingestellt werden. Dadurch kann das Kraftfahrzeug besonders sicher innerhalb des Parkhauses manövriert werden.

Erfindungsgemäß ist es vorgesehen, dass während des Manövriervorganges eine aktuelle Position des Kraftfahrzeugs bestimmt wird und die aktuelle Position des Kraftfahrzeugs an die fahrzeugexterne Einheit übermittelt wird, wobei die durch die zumindest eine Messstelle erfassten klimaspezifischen Messdaten der aktuellen Position des Kraftfahrzeugs zugeordnet werden. Bevorzugt weist das Parkhaus dazu mehrere Messstellen auf. Während des Manövriervorganges wird insbesondere kontinuierlich, also in vorbestimmten zeitlichen Abständen, eine aktuelle Position des Kraftfahrzeugs erfasst. In Abhängigkeit von der aktuellen Position des Kraftfahrzeugs kann dieser Position eine Messstelle der mehreren Messstellen zugeordnet werden. Mit "Zuordnen" ist hier bevorzugt gemeint, dass einer aktuellen Position eine oder mehrere Messstellen, welche sich insbesondere am nächsten zu der aktuellen Position des Kraftfahrzeugs befinden, zugewiesen werden. Befindet sich das Kraftfahrzeug beispielsweise zwischen zwei Messstellen, so können in Abhängigkeit von der aktuellen Position die klimaspezifischen Messdaten für diese Position interpoliert werden. Mit anderen Worten können für das Kraftfahrzeug, insbesondere für den zumindest einen Sensor des Kraftfahrzeugs, positionsbezogen oder standortabhängig klimaspezifische Messdaten erfasst und/oder ausgewertet und/oder bestimmt werden. Durch die Bestimmung der klimaspezifischen Messdatenabhängigkeit von der aktuellen Position des Kraftfahrzeugs kann eine Genauigkeit der Erfassung der klimaspezifischen Messdaten und damit eine Zuverlässigkeit des zumindest einen Sensors des Kraftfahrzeugs erhöht werden.

Eine Auswertung der klimaspezifischen Messdaten in Abhängigkeit von einer aktuellen Position des Kraftfahrzeugs kann dabei fahrzeugseitig, also auf Seiten des Kraftfahrzeugs, oder parkhausseitig, als auf Seiten des Parkhauses, erfolgen.

Alternativ ist es erfindungsgemäß vorgesehen, dass die fahrzeugexterne Einheit die durch die Messstellen erfassten klimaspezifischen Messdaten an das Kraftfahrzeug übermittelt und die Steuereinheit des Kraftfahrzeugs die klimaspezifischen Messdaten der aktuellen Position des Kraftfahrzeugs zuordnet. Je nach Auswertung der klimaspezifischen Messdaten - fahrzeugseitig oder parkhausseitig - können die klimaspezifischen Messdaten positionsbezogen, das heißt, in Abhängigkeit von der Stelle oder dem Ort, an dem sich das Kraftfahrzeug befindet, ausgewertet werden.

In vorteilhafter Weise befindet sich das Kraftfahrzeug während des Manövriervorganges in einem autonomen oder vollautomatisierten Fahrbetrieb. Mit anderen Worten wird das Kraftfahrzeug während des Manövriervorganges autonom oder vollautomatisiert, insbesondere mittels der Steuereinheit des Kraftfahrzeugs, betrieben. Bei der Steuereinheit kann es sich beispielsweise um eine elektronische Schaltung handeln. Mit autonomen Fahrbetrieb ist hier bevorzugt gemeint, dass sich das Kraftfahrzeug selbstständig bewegt. Im autonomen Fahrbetrieb kann es vorgesehen sein, dass sich keiner im Kraftfahrzeug oder kein aktiver Fahrzeugführer, also Fahrer, oder nur Passagiere im Kraftfahrzeug befinden. Im autonomen Fahrbetrieb muss sich der Fahrer des Kraftfahrzeugs also nicht weiter um den weiteren Betrieb des Kraftfahrzeugs kümmern. Während des Manövriervorganges im autonomen Fahrbetrieb wird das Kraftfahrzeug autonom von der Abgabestelle zu der vorbestimmten Position, insbesondere durch die Steuereinheit des Kraftfahrzeugs, bewegt. Beispielsweise kann das Kraftfahrzeug autonom in dem Parkhaus oder auf dem Parkplatz von der Abgabestelle zu der vorbestimmten Position, insbesondere einer Parkposition, fahren, zum Beispiel dort einparken. Zusätzlich oder alternativ kann es vorgesehen sein, dass das Kraftfahrzeug dazu eingerichtet ist, von der vorbestimmten Position zurück zu der Abgabestelle zu fahren. Der Manövriervorgang kann also einen Einparkvorgang, das heißt, das autonome Fahren von der Abgabestelle zu der vorbestimmten Position, und/oder einen Ausparkvorgang von der vorbestimmten Position zu der Abgabestelle umfassen.

In vorteilhafter Weise werden die durch die Messstellen erfassten klimaspezifischen Messdaten durch die fahrzeugexterne Einheit der aktuellen Position des Kraftfahrzeugs zugeordnet und an das Kraftfahrzeug übermittelt.

Alternativ kann es gemäß einer vorteilhaften Weiterbildung vorgesehen sein, dass durch die fahrzeugexterne Einheit die durch die zumindest eine Messstelle oder Messstellen erfassten klimaspezifischen Messdaten der aktuellen Position des Kraftfahrzeugs zugeordnet und an das Kraftfahrzeug, insbesondere von der fahrzeugexternen Einheit, übermittelt werden. In vorteilhafter Weise wird die vorbestimmte Position durch die fahrzeugexterne Einheit bestimmt und an das Kraftfahrzeug, insbesondere die Steuereinheit des Kraftfahrzeugs, übermittelt, wobei auf Basis der vorbestimmten Position die Steuereinheit eine Trajektorie von der Abgabestelle zu der vorbestimmten Position bestimmt, entlang welcher das Kraftfahrzeug zu der vorbestimmten Position geführt wird. Mit "Trajektorie" ist bevorzugt eine Bahnkurve oder ein Pfad oder ein Weg oder Route gemeint, entlang welcher oder entlang welchem sich das Kraftfahrzeug bewegt. Mit anderen Worten kann die fahrzeugexterne Einheit dazu eingerichtet sein, die Zielposition oder vorbestimmte Position, zu der sich das Kraftfahrzeug zu bewegen hat, bestimmen und an das Kraftfahrzeug, insbesondere an die Steuereinheit des Kraftfahrzeugs übermitteln oder vorgeben. Beispielsweise kann die fahrzeugexterne Einheit einen Parkplatz oder eine Parklücke für das Kraftfahrzeug ermitteln. Die Steuereinheit des Kraftfahrzeugs kann daraufhin eine Trajektorie von der Abgabestelle bis zu der vorbestimmten Position planen. Anschließend kann die Steuereinheit dazu eingerichtet sein, das Kraftfahrzeug derart zu steuern, dass das Kraftfahrzeug die Trajektorie automatisch abfährt. Während der Fahrt oder des Manövriervorganges des Kraftfahrzeugs von der Abgabestelle bis zu der vorbestimmten Position können Objekte in einer Umgebung des Kraftfahrzeugs mittels des zumindest einen Sensors erfasst werden. Sofern ein Objekt erkannt oder erfasst wurde, welches sich auf der geplanten Trajektorie befindet, kann die Trajektorie um das Objekt herum, insbesondere durch die Steuereinheit des Kraftfahrzeugs, geplant werden. Ist dies nicht möglich, bremst das Kraftfahrzeug bevorzugt in den Stillstand ab und meldet die Störung beispielsweise der fahrzeugexternen Einheit des Parkhauses.

Zu der Erfindung gehört auch ein System zum Unterstützen eines Manövriervorganges eines Kraftfahrzeugs in einem Parkhaus, wobei sich das Kraftfahrzeug innerhalb des Parkhauses während des Manövriervorganges von einer Abgabestelle des Parkhauses zu einer vorbestimmten Position im Parkhaus bewegt, wobei zumindest ein Sensor des Kraftfahrzeugs dazu eingerichtet ist, den Manövriervorgang des Kraftfahrzeugs zu überwachen. Das System umfasst eine Steuereinheit des Kraftfahrzeugs, welche dazu eingerichtet ist, eine Kommunikationsverbindung zu einer fahrzeugexternen Einheit des Parkhauses aufzubauen. Ferner umfasst das System zumindest eine Messstelle des Parkhauses, welche dazu eingerichtet ist, klimaspezifischen Messdaten zu erfassen und an die fahrzeugexterne Einheit zu übertragen oder zu übermitteln. Die Steuereinheit des Kraftfahrzeugs ist ferner dazu eingerichtet, den zumindest einen Sensor des Kraftfahrzeugs in Abhängigkeit von klimaspezifischen Messdaten zu kalibrieren. Das System weist ferner eine Erfassungseinrichtung auf, welche dazu eingerichtet ist, eine aktuellen Position des Kraftfahrzeugs zu erfassen, wobei die Erfassungseinrichtung ferner dazu eingerichtet ist, die erfasste aktuelle Position des Kraftfahrzeugs an die fahrzeugexterne Einheit zu übertragen, wobei der durch die zumindest eine Messstelle erfassten klimaspezifischen Messdaten der aktuellen Position des Kraftfahrzeugs zugeordnet sind. Alternativ ist die fahrzeugexterne Einheit dazu eingerichtet, die durch die Messstellen erfassten klimaspezifischen Messdaten an das Kraftfahrzeug zu übermitteln und die Steuereinheit des Kraftfahrzeugs ist dazu eingerichtet, die klimaspezifischen Messdaten der aktuellen Position des Kraftfahrzeugs zuzuordnen.

In vorteilhafter Weise weist die zumindest eine Messstelle zumindest ein Temperarturmessgerät und/oder zumindest ein Luftfeuchtigkeitsmessgerät. Als Temperarturmessgerät kann die Messstelle beispielsweise ein Thermometer aufweisen. Zur Messung der Luftfeuchtigkeit kann das Luftfeuchtigkeitsmessgerät beispielsweise als Hygrometer ausgebildet sein. Durch derartige Geräte kann das Klima in dem Parkhaus, insbesondere die Temperatur und/oder die Luftfeuchtigkeit, besonders zuverlässig bestimmt oder ausgewertet werden.

Der Erfindung liegt die Erkenntnis zugrunde, dass es aufgrund unterschiedlicher Lufttemperaturen im Parkhaus zu unterschiedlichen Temperaturen kommen kann, sodass, insbesondere auf der gleichen Etage oder Ebene des Parkhauses, beispielsweise im Bereich des Bodens des Parkhauses, die Temperatur niedriger sein kann, als im Bereich der Decke. Das rührt beispielsweise daher, dass warme Luft nach oben steigt. Um auf der Einbauhöhe von dem zumindest einen Sensoren den zumindest einen Sensor zuverlässig betreiben zu können, sieht eine vorteilhafte Weiterbildung vor, dass die zumindest eine Messstelle in dem Parkhaus mit einer Einbauhöhe von dem Boden des Parkhauses, auf dem sich das Kraftfahrzeug bewegt, zwischen 300 mm und 500 mm angeordnet ist. Mit anderen Worten kann die zumindest eine Messstelle zwischen 300 mm und 500 mm über dem Boden des Parkhauses angeordnet sein. Ist die Messstelle in einem solchen Bereich angeordnet, so befindet sich die Messstelle bevorzugt auf Höhe des am Kraftfahrzeug eingebauten zumindest einen Sensors. Durch die an den Sensor des Kraftfahrzeugs angepasste Einbauhöhe der Messstellen bezieht sich die Auswertung der klimaspezifischen Daten auf den genauen Einsatzbereich des Sensor am Kraftfahrzeug, wodurch ein Zuverlässigkeit und/oder Genauigkeit des Sensors weiter erhöht werden kann.

Gemäß einer Weiterbildung befindet sich die Abgabestelle in einem vom übrigen Parkhaus abgegrenzten Bereich des Parkhauses, wobei das Parkhaus als ein zur Umgebung geschlossenes Parkhaus ausgebildet ist, wobei sich die zumindest eine Messstelle innerhalb des abgegrenzten Bereichs befindet. Mit "abgegrenzten Bereich" ist bevorzugt ein abgeschlossener Raum innerhalb des Parkhauses gemeint. Mit anderen Worten befindet sich die Abgabestelle in einem nicht-öffentlichen, abgegrenzten Bereich des Parkhauses. Kraftfahrzeuge können über diesen Bereich beispielsweise nur über eine Schleuse betreten. Die Schleuse kann bevorzugt zumindest zwei Zugänge aufweisen, wobei über einen der Zugänge das Kraftfahrzeug in die Schleuse fahren kann und über den zweiten Zugang die Schleuse verlassen kann. Die Zugänge können beispielsweise als Rolltore oder Tür ausgebildet sein. Die Schleuse ist insofern vorteilhaft, da in so einem Bereich der Luftaustausch gering ist und sich somit die Temperatur und/oder Luftfeuchtigkeit in diesem Bereich nicht abrupt ändert. Zudem ist es möglich, mit deutlich weniger Messstellen für die Temperatur- und/oder Luftfeuchtigkeitsmessung zu arbeiten. Besonders bevorzugt weist das System mehrere Messstellen auf, wobei sich zumindest eine Messstelle innerhalb der Schleuse, eine in der Mitte des Bereich sowie eine in der zur Schleuse weitentferntesten Stelle befindet. Sofern weitere Zugänge zu dem abgegrenzten Bereich, beispielsweise über eine oder mehrere Türen, vorhanden sind, sind diese bevorzugt ebenfalls mit zumindest einer Messstelle auszustatten.

In vorteilhafter Weise weist das System ferner eine Erfassungseinrichtung auf, welche dazu eingerichtet ist, eine aktuelle Position des Kraftfahrzeugs zu erfassen, wobei die Erfassungseinrichtung ferner dazu eingerichtet ist, die erfasste aktuelle Position des Kraftfahrzeugs an die fahrzeugexterne Einheit zu übertragen. Beispielsweise kann die Erfassungseinrichtung zum Erfassen der aktuellen Position des Kraftfahrzeugs am Kraftfahrzeug angeordnet sein. So kann die Erfassungseinrichtung beispielsweise zum Erfassen der aktuellen Position des Kraftfahrzeugs einen Odometriesensor aufweisen. Mit anderen Worten kann die Erfassungseinrichtung auf Basis von Odometrie eine zurückgelegte Wegstrecke des Kraftfahrzeugs oder Bewegung des Kraftfahrzeugs erfassen. Mit anderen Worten kann die aktuelle Position des Kraftfahrzeugs mittels Odometrie ausgewertet werden. Da insbesondere die Abgabestelle, von der aus sich das Kraftfahrzeug zu der vorbestimmten Position im Parkhaus bewegt, bekannt ist, kann auf Basis von Odometrie, also einer Bewegung der Räder des Kraftfahrzeugs, die zurückgelegte Wegstrecke ausgehend von der Abgabestelle bestimmt werden. Zusätzlich oder alternativ kann die Erfassungseinrichtung zum Erfassen der aktuellen Position des Kraftfahrzeugs einen Lenkradwinkelsensor aufweisen. Der Lenkradwinkelsensor misst den Einschlagwinkel des Lenkrades, also den Lenkwinkel. Besonders bevorzugt kann die Erfassungseinrichtung dazu eingerichtet sein, den Lenkwinkel und die Bewegung der Räder des Kraftfahrzeugs auszuwerten. Durch den erfassten Lenkwinkel und/oder die erfasste Bewegung der Räder des Kraftfahrzeugs kann eine Trajektorie des Kraftfahrzeugs ermittelt oder bestimmt werden. Mit Hilfe der Erfassungseinrichtung kann die aktuelle Position des Kraftfahrzeugs besonders genau und zuverlässig bestimmt werden.

Eine vorteilhafte Weiterbildung sieht vor, dass die Erfassungseinrichtung ferner dazu eingerichtet ist, zu bestimmen, auf welcher Ebene des Parkhauses sich das Kraftfahrzeug befindet, wobei die Erfassungseinrichtung zum Bestimmen der Ebene des Parkhauses einen Neigungssensor des Kraftfahrzeugs aufweist. Bei dem Parkhaus handelt es sich bevorzugt um ein mehrstöckiges Parkhaus. Da die Steuereinheit des Kraftfahrzeugs bevorzugt dazu eingerichtet ist, eine Trajektorie von der Abgabestelle zu der vorbestimmten zu bestimmen, kann mithilfe der Trajektorie und dem Neigungswinkelsensor des Kraftfahrzeugs bestimmt werden, auf welcher Ebene oder Etage sich das Kraftfahrzeug befindet. Sobald das Kraftfahrzeug in einem mehrstöckigen Parkhaus eine Ebene hoch- oder runterfährt, kann dies durch den Neigungssensor des Kraftfahrzeugs erfasst werden.

Zu der Erfindung gehören auch Weiterbildungen des erfindungsgemäßen Systems, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Systems hier nicht noch einmal beschrieben.

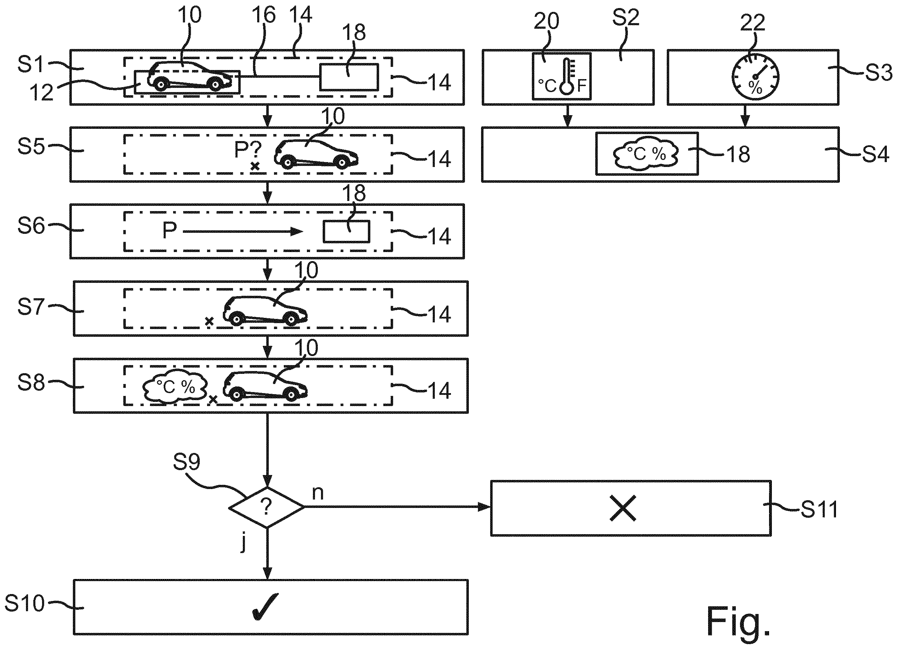

Im Folgenden ist ein Ausführungsbeispiel der Erfindung beschrieben. Hierzu zeigt die einzige Figur (Fig.) ein schematisches Ablaufdiagramm mit einzelnen Verfahrensschritten des Verfahrens zum Unterstützen eines Manövriervorganges eines Kraftfahrzeugs.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In der Fig. sind die Verfahrensschritte des Verfahrens zum Unterstützen eines Manövriervorganges eines Kraftfahrzeugs in einem Parkhaus erläutert.

Ein Fahrer eines Kraftfahrzeugs 10, welches insbesondere als Personenkraftwagen ausgebildet ist, stellt das Kraftfahrzeug 10 an einer Abgabestelle 12 in einem Parkhaus 14 ab. An der Abgabestelle 12 ist der Fahrer aus dem Kraftfahrzeug 10 ausgestiegen. Das Kraftfahrzeug 10 wurde durch den Fahrer an der Abgabestelle 12 in den autonomen Fahrbetrieb, insbesondere zum Durchführen eines anschließenden Manövriervorganges des Kraftfahrzeugs 10 oder Fahrmanövers des Kraftfahrzeugs 10, überführt. Mit anderen Worten führt das Kraftfahrzeug 10, insbesondere eine Steuereinheit des Kraftfahrzeugs 10, in dem Parkhaus 14 einen autonomen oder vollautomatischen Manövriervorgang durch. Unter "Manövriervorgang" ist insbesondere ein Einparkvorgang, also das autonome Fahren des Kraftfahrzeugs 10 entlang einer vorbestimmten Wegstrecke von der Abgabestelle 12 zu einer vorbestimmten Position, also einem Parkplatz, oder ein automatischer Ausparkvorgang, also das autonome Fahren oder Manövrieren des Kraftfahrzeugs 10 von der vorbestimmten Position, also aus der Parklücke, zu der Abgabestelle 12 gemeint.

Sobald sich das Kraftfahrzeug 10 an der Abgabestelle 12 oder in dem Parkhaus 14 befindet, ist das Kraftfahrzeug 10, insbesondere eine Steuereinheit (in Fig. nicht dargestellt) des Kraftfahrzeugs 10 dazu eingerichtet, eine Kommunikationsverbindung 16 zu einer fahrzeugexternen Einheit 18 des Parkhauses 14 aufzubauen oder herzustellen. Beispielsweise handelt es sich bei der fahrzeugexternen Einheit 18 um eine Servereinheit oder eine Verarbeitungseinheit. In einem ersten Verfahrensschritt S1 wird also in dem Parkhaus 14 eine Kommunikationsverbindung von dem Kraftfahrzeug 10 zu der fahrzeugexternen Einheit des Parkhauses 18 hergestellt. Bei der Kommunikationsverbindung 16 handelt es sich bevorzugt um eine bidirektionale Verbindung, das heißt, dass insbesondere Daten von dem Kraftfahrzeug 10 zu der fahrzeugexternen Einheit 18 und von der fahrzeugexternen Einheit 18 zu dem Kraftfahrzeug 10 übertragen oder übermittelt werden können. Beispielsweise kann als die Kommunikationsverbindung 16 eine WLAN-Verbindung hergestellt werden. Mit anderen Worten kann das Kraftfahrzeug 10 oder die Steuereinheit des Kraftfahrzeugs 10 eine Verbindung zu der fahrzeugexternen Einheit 18, insbesondere über eine WLAN-Verbindung, aufbauen.

Sobald die Kommunikationsverbindung 16 zwischen dem Kraftfahrzeug 10 und der fahrzeugexternen Einheit 18 hergestellt ist, übermittelt die fahrzeugexterne Einheit 18 die vorbestimmte Position, insbesondere an der das Kraftfahrzeug 10 einparken soll, an das Kraftfahrzeug 10. Die fahrzeugexterne Einheit 18 ist also dazu eingerichtet, die automatische Fahrzeugabgabe und -bereitstellung zu unterstützen. Damit für den automatischen Manövriervorgang das Kraftfahrzeug 10 zu der vorbestimmten Position geleitet werden kann, ist die Steuereinheit des Kraftfahrzeugs 10 dazu eingerichtet, die Trajektorie von der Abgabestelle 12 oder dem Übergabepunkt zu der vorbestimmten Position zu planen oder zu bestimmen oder zu berechnen. Anschließend ist das Kraftfahrzeug 10 dazu eingerichtet, die Trajektorie automatisch abzufahren.

Parkhausseitig, also im Parkhaus 14, sind mehrere Messstellen angeordnet. Die Messstellen sind dazu eingerichtet, klimaspezifische Parameter im Parkhaus 14, insbesondere in einem Parkhausinnenraum, zu erfassen. Bevorzugt sind die Messstellen verteilt im Parkhaus 14 angeordnet. Durch die Messstellen können an unterschiedlichen Stellen im Parkhaus 14 und/oder auf den verschiedenen Ebenen des Parkhauses 14 die klimaspezifischen Parameter oder Daten erfasst werden. Jede Messstelle weist zumindest ein Temperaturmessgerät 20 und ein Luftfeuchtigkeitsmessgerät 22 auf. Das Temperaturmessgerät 20 ist dazu eingerichtet, eine Temperatur in einer Umgebung der Messstelle zu erfassen. Als Temperaturmessgerät 20 kann die Messstelle beispielsweise ein Thermometer aufweisen. Das Luftfeuchtigkeitsmessgerät 22 ist dazu eingerichtet, eine Luftfeuchtigkeit in einer Umgebung der Messstelle zu erfassen. Als Luftfeuchtigkeitsmessgerät 22 kann die Messstelle beispielsweise ein Hygrometer aufweisen. Anstelle mehrere Luftfeuchtigkeitsmessgeräte zu verwenden kann es auch zusätzlich oder alternativ vorgesehen sein, dass das Parkhaus 14 eine Klimaanlage aufweist, welche dazu eingerichtet ist, das Parkhaus 14 zu klimatisieren und damit einen Wert einer Luftfeuchtigkeit für den Innenraum des Parkhauses 14 vorzugeben oder einzustellen. Durch den durch die Klimaanlage eingestellten Luftfeuchtigkeitswert ist der Wert der Luftfeuchtigkeit im Parkhaus 14 bekannt. Wird in dem Parkhaus eine Klimaanlage eingesetzt, so ist das Parkhaus 14 als ein geschlossenes Parkhaus ausgebildet, sodass ein Luftaustausch im Innenraum des Parkhauses 14 nur mittels der Klimaanlage möglich ist.

In einem zweiten Verfahrensschritt S2 und einem dritten Verfahrensschritt S3 werden als die klimaspezifischen Messdaten oder Parameter mittels der Temperaturmessgeräte und Luftfeuchtigkeitsmessgeräte Temperatur und Luftfeuchtigkeit gemessen. Dabei werden die klimaspezifischen Messdaten kontinuierlich, also in regelmäßigen zeitlichen Abständen, erfasst. Die zumindest eine Messstelle oder die mehreren Messstellen sind dazu eingerichtet, die erfassten klimaspezifischen Messdaten an die fahrzeugexterne Einheit 18 zu übermitteln. Die fahrzeugexterne Einheit 18 ist in einem weiteren Verfahrensschritt S4 dazu eingerichtet, die klimaspezifischen Messdaten zu empfangen und/oder auszuwerten.

Damit das Kraftfahrzeug 10 autonom oder automatisch den Manövriervorgang durchführen kann, wird das Kraftfahrzeug 10 durch zumindest einen Sensor unterstützt. Der zumindest eine Sensor ist als Ultraschallsensor ausgebildet und am Kraftfahrzeug 10 angeordnet. Das Kraftfahrzeug 10 kann auch mehrere Sensoren, insbesondere mehrere Ultraschallsensoren, aufweisen.

Der zumindest eine Sensor, also der Ultraschallsensor, ist bevorzugt Bestandteil eines Fahrerassistenzsystems des Kraftfahrzeugs 10. Das Fahrerassistenzsystem kann den zumindest einen Ultraschallsensor und die Steuereinheit des Kraftfahrzeugs 10 aufweisen. Die Steuereinheit kann beispielsweise durch ein elektronisches Steuergerät (ECU - Electronic Control Unit) des Kraftfahrzeugs 10 gebildet sein.

Besonders bevorzugt weist das Kraftfahrzeug 10 acht Ultraschallsensoren. Dabei können vier Ultraschallsensoren in einem Frontbereich des Kraftfahrzeugs 10 und vier Ultraschallsensoren in einem Heckbereich des Kraftfahrzeugs 10 angeordnet. Die Ultraschallsensoren sind dazu ausgebildet, ein Objekt in einer Umgebung des Kraftfahrzeugs 10 zu erfassen. Zudem werden die Ultraschallsensoren dazu verwendet, einen Abstand zwischen dem Objekt und dem Kraftfahrzeug 10 zu bestimmen. Die Ultraschallsensoren sind zur Datenübertragung mit der Steuereinheit verbunden.

Während des Manövriervorganges des Kraftfahrzeugs 10, also der Fahrt von der Abgabestelle 12 zu der vorbestimmten Position, erfasst das Fahrerassistenzsystem des Kraftfahrzeugs 10 Objekte mittels der verbauten Ultraschallsensoren. Sofern ein Objekt erkannt wurde, welches sich auf der geplanten Trajektorie befindet, wird die Trajektorie um das Objekt herum geplant. Ist dies nicht möglich, bremst das Kraftfahrzeug 10 in den Stillstand ab und meldet die Störung der fahrzeugexternen Einheit 18 des Parkhauses 14.

Der Betrieb des zumindest einen Ultraschallsensors oder der mehreren Ultraschallsensoren des Kraftfahrzeugs 10 ist abhängig von der Temperatur und/oder Luftfeuchtigkeit in der Umgebung des Kraftfahrzeugs 10. Um den Manövriervorgang in dem Parkhaus 14 besonders sicher und zuverlässig durchführen zu können, ist es notwendig, den zumindest einen Sensor oder die Ultraschallsensoren in Abhängigkeit von der aktuell vorliegenden Temperatur und/oder Luftfeuchtigkeit in der Umgebung des Kraftfahrzeugs 10 anzupassen. Je nachdem, wo sich das Kraftfahrzeug 10 in dem Parkhaus 14 befindet, können unterschiedliche Temperaturen oder Werte der Luftfeuchtigkeit vorliegen. Alternativ kann das Parkhaus 14, wie bereits oben erläutert, als geschlossenes Parkhaus 14 ausgebildet sein. In diesem Fall ist die Temperatur und/oder die Luftfeuchtigkeit in dem Parkhaus 14 nahezu konstant. In diesem Fall wäre zumindest eine Messstelle ausreichend. Um jedoch die Genauigkeit der erfassten Temperatur- und/oder Luftfeuchtigkeitswerte innerhalb des Parkhauses 14 zu erhöhen, sind Messstellen verteilt in dem Parkhaus 14 angeordnet. In Abhängigkeit von einer aktuellen Position P des Kraftfahrzeugs 10 kann positionsbezogen ein aktueller klimaspezifischer Messwert oder Parameter zur Anpassung des zumindest einen Sensors oder der mehreren Sensoren des Kraftfahrzeugs 10 bereitgestellt werden.

Dazu wird in einem Verfahrensschritt S5 eine aktuelle Position P des Kraftfahrzeugs 10 erfasst. Beispielsweise kann die aktuelle Position P des Kraftfahrzeugs 10 mithilfe einer Erfassungseinrichtung, wie beispielsweise einem Odometriesensor oder einem Lenkradwinkelsensor oder einer Umfelderfassungseinrichtung, wie beispielsweise eine Kamera, erfasst werden. Da die Trajektorie bekannt ist, kann während des Fahrmanövers, also dem Abfahren der Trajektorie, die Steuereinheit des Kraftfahrzeugs 10 anhand der erfassten Werte der Erfassungseinrichtung die aktuelle Position P des Kraftfahrzeugs 10 relativ zu der Abgabestelle 12 ermitteln oder bestimmen.

Die Steuereinheit des Kraftfahrzeugs 10 kann dazu eingerichtet sein, in einem weiteren Verfahrensschritt S6 die aktuelle Position P des Kraftfahrzeugs 10 an die fahrzeugexterne Einheit 18 zu übermitteln.

Daraufhin kann in einem weiteren Verfahrensschritt S7 die fahrzeugexterne Einheit 18 dazu eingerichtet sein, die durch die Messstellen erfassten klimaspezifischen Messdaten oder Parameter der aktuellen Position P des Kraftfahrzeugs 10 zuzuordnen. Mit anderen Worten kann über die Messstellen die fahrzeugexterne Einheit 18 des Parkhauses 14 dazu eingerichtet sein, die klimaspezifischen Messdaten an jedem Ort, an dem die Messstellen angeordnet sind, innerhalb des Parkhauses 14 oder zumindest innerhalb des spezifischen Bereichs, in dem das automatische Fahrmanöver durchgeführt wird, also insbesondere die automatische Fahrzeugabgabe/-Bereitstellungsfunktion betrieben wird, über Interpolation ermitteln. Damit kann die fahrzeugexterne Einheit 18 des Parkhauses 14 dazu eingerichtet sein, die aktuelle Temperatur und/oder Luftfeuchtigkeit an der Position P des Kraftfahrzeugs 10 zu bestimmen und die positionsbezogenen klimaspezifischen Messdaten in einem weiteren Verfahrensschritt S8 an das Kraftfahrzeug zu übermitteln. Die klimaspezifischen Messdaten werden an das Kraftfahrzeug 10 zum Kalibrieren des zumindest einen Sensors und/oder der mehreren Sensoren des Kraftfahrzeugs 10 übermittelt.

Anstelle, dass die Auswertung der klimaspezifischen Messdaten in Abhängigkeit von der aktuellen Position P des Kraftfahrzeugs mittels der fahrzeugexternen Einheit 18 erfolgt, kann es alternativ vorgesehen sein, dass die Auswertung der klimaspezifischen Messdaten in Abhängigkeit von der aktuellen Position P des Kraftfahrzeugs 10 fahrzeugseitig, beispielsweise mittels der Steuereinheit des Kraftfahrzeugs 10, erfolgt. Dazu wird die aktuelle Position P des Kraftfahrzeugs 10 mithilfe der Erfassungseinrichtung des Kraftfahrzeugs 10 erfasst. Ferner werden durch die fahrzeugexterne Einheit 18 über die Kommunikationsverbindung 16 die klimaspezifischen Messdaten aller oder der zumindest einen Messstelle an das Kraftfahrzeug 10 übermittelt. Die Steuereinheit des Kraftfahrzeugs 10 ist daraufhin dazu eingerichtet, die empfangenen klimaspezifischen Messdaten der aktuellen Position P des Kraftfahrzeugs 10 zuzuordnen oder zuzuweisen. Mit anderen Worten können die fahrzeugexterne Einheit 18, als auch die Steuereinheit des Kraftfahrzeugs 10 dazu eingerichtet sein, der aktuellen Position P des Kraftfahrzeugs 10 die nächstliegende Messstelle zuzuordnen und die durch diese nächstliegende Messstelle erfassten klimaspezifischen Messdaten zum Kalibrieren des zumindest einen Sensors und/oder der mehreren Sensoren des Kraftfahrzeugs 10 zu verwenden.

In einem weiteren Verfahrensschritt S9 wird überprüft, ob sich die Temperatur und/oder die Luftfeuchtigkeit, also die klimaspezifischen Messdaten, an der aktuellen Position P des Kraftfahrzeugs 10 geändert hat. Wird durch die Steuereinheit des Kraftfahrzeugs 10 oder die fahrzeugexterne Einheit 18 erfasst, dass sich klimaspezifischen Messdaten an der aktuellen Position P im Gegensatz zur vorhergehenden Position des Kraftfahrzeugs 10 geändert haben (j), so werden in einem weiteren Verfahrensschritt S10 der zumindest eine Sensor, also der Ultraschallsensor, oder die mehreren Sensoren des Kraftfahrzeugs 10 kalibriert oder angepasst. Bei der Kalibrierung des Sensors ist die Steuereinheit des Kraftfahrzeugs 10 dazu eingerichtet, anhand der aktuellen klimaspezifischen Messdaten an der aktuellen Position des Kraftfahrzeugs 10 die Abstandsmessung des Sensors anzupassen. Die Anpassung umfasst beispielsweise die Empfangsempfindlichkeit, den Sendeschalldruck und/oder den Wert der temperaturabhängigen Schallgeschwindigkeit zur Ermittlung des Abstands.

Wird in dem Überprüfungsschritt S9 festgestellt, dass sich die Temperatur und/oder die Luftfeuchtigkeit, also die klimaspezifischen Messdaten, an der aktuellen Position P des Kraftfahrzeugs nicht geändert (n) haben, so werden in einem weiteren Verfahrensschritt S11 der zumindest eine Sensor oder die mehreren Sensoren des Kraftfahrzeugs 10 nicht angepasst oder kalibriert.

Insgesamt zeigt das Beispiel, wie durch die Erfindung ein Verfahren und eine Vorrichtung oder ein System zur Ermittlung der Lufttemperatur und -feuchtigkeit in einem Parkhaus, insbesondere zur Unterstützung eines autonomen Parkvorgangs eines Kraftfahrzeugs in dem Parkhaus, bereitgestellt wird.

Gemäß einem besonders bevorzugten Ausführungsbeispiel wird ein auf Ultraschallsensoren basierendes Assistenzsystem, welches das Kraftfahrzeug ausschließlich in einem Parkhaus oder in einem bestimmten, abgegrenzten Bereich des Parkhauses automatisch ab einer vorbestimmten Position, also einer Abgabestelle, aus einparkt und zu einem anderen Zeitpunkt wieder an dieser Abgabestelle automatisch zur Verfügung stellt.

Dabei ist es notwendig ein Verfahren zu verwenden, welches die Temperatur und die Luftfeuchtigkeit der Umgebungsluft in dem Parkhaus bestimmt und diese Informationen (Temperatur und/oder Luftfeuchtigkeit) dem ultraschallbasierten Assistenzsystem zur Verfügung stellt, um dieses mithilfe dieser Information entsprechend hinsichtlich der Entfernungsmessung (Schallgeschwindigkeit und/oder Luftschalldämpfung) anzupassen.

Hierzu sind folgende Schritte notwendig: zunächst wird die Temperatur und/oder die Luftfeuchtigkeit der Luft des Bereichs des Parkhauses, in dem das Assistenzsystem des Kraftfahrzeugs verwendet wird, an verschiedenen Messstellen des Parkhauses bestimmt. Dabei erfolgt eine kontinuierliche Übermittlung der Ergebnisse der Temperatur-und Luftfeuchtigkeitsmessung der verschiedenen Messstellen an eine fahrzeugexterne Einheit des Parkhauses, beispielsweise eine Verarbeitungseinheit des Parkhauses. Beispielsweise kann innerhalb des Parkhauses eine Übermittlung der Daten oder Informationen zur Temperatur und/oder Luftfeuchtigkeit der Messstellen per WLAN an einen Server oder eine Servereinrichtung des Parkhauses, als fahrzeugexterne Einheit, erfolgen. In einem Verfahrensschritt des Verfahrens wird eine sichere Kommunikation zwischen dem Kraftfahrzeug und der Verarbeitungseinheit des Parkhauses an der Abgabestelle, zum Beispiel eine WLAN-Verbindung oder über Mobilfunk, aufgebaut. Anschließend wird eine aktuelle Position des Kraftfahrzeugs anhand von Hodometrie sowie Umfeldsensoren bestimmen. In einem weiteren Verfahrensschritt erfolgt eine Übermittlung der aktuellen Position des Kraftfahrzeugs vom Kraftfahrzeug zur fahrzeugexternen Einheit des Parkhauses. In einem weiteren Verfahrensschritt wird die aktuelle Temperatur und Luftfeuchtigkeit für die Position des Kraftfahrzeugs durch Nutzung der Messergebnisse von den Messstellen und/oder Interpolation in der fahrzeugexternen Einheit bestimmt. Anschließend wird die Temperatur und Luftfeuchtigkeit für die Position des Kraftfahrzeugs von der fahrzeugexternen Einheit an das Kraftfahrzeug übermittelt. Schließlich erfolgt eine Anpassung der Parameter für die Abstandsmessung der Ultraschallsensoren anhand der übermittelten Temperatur-und Luftfeuchtigkeit. Dabei kann beispielsweise ein Sendeschalldruck und/oder eine Empfangsempfindlichkeit und/oder eine Bestimmung der Schallgeschwindigkeit durch die übermittelte Umgebungstemperatur der Ultraschallsensoren angepasst werden.

Der Fahrer fährt das Kraftfahrzeug also zunächst in einem Parkhaus, welches die automatische Fahrzeugabgabe und -bereitstellung unterstützt und übergibt das Kraftfahrzeug an einem spezifischen Übergabepunkt, also der Abgabestelle. An diesem Punkt baut das Kraftfahrzeug eine sichere Verbindung zu dem parkhauseigenen Server (fahrzeugexterne Einheit) mittels WLAN-Verbindung auf. Die fahrzeugexterne Einheit übermittelt die Zielposition, an der das Kraftfahrzeug eingepackt werden soll, an das Kraftfahrzeug. Das Assistenzsystem des Kraftfahrzeugs plant daraufhin eine Trajektorie vom Übergabepunkt bis zur Zielposition und fährt anschließend automatisch diese Trajektorie ab. Während der Fahrt vom Übergabepunkt bis zur Zielposition erfasst das Assistenzsystem des Kraftfahrzeugs Objekte mittels der verbauten Ultraschallsensoren. Sofern ein Objekt erkannt wurde, welches sich auf der geplanten Trajektorie befindet, wird die Trajektorie um das Objekt herum geplant. Ist dies nicht möglich, bremst das Kraftfahrzeug in den Stillstand ab und meldet die Störung der fahrzeugexternen Einheit des Parkhauses. Während des abfahren der Trajektorie ermittelt das Assistenzsystem des Kraftfahrzeugs anhand von Odometrie sowie Umfeldsensoren die Position relativ zur Abgabestelle und übermittelt diese an die fahrzeugexterne Einheit des Parkhauses. Über verschiedene Temperatur- und Luftfeuchtigkeit-Messstellen ist die fahrzeugexterne Einheit des Parkhauses in der Lage, die Temperatur und Luftfeuchtigkeit an jedem Ort innerhalb des Parkhauses oder mindestens innerhalb des spezifischen Bereichs für den Betrieb der automatischen Fahrzeugabgabe/- bereitstellungsfunktion über Interpolation zu ermitteln. Zusätzlich oder alternativ kann die Temperatur- und Luftfeuchtigkeitsmessung über eine Klimaanlage des Parkhauses durchgeführt werden. Die fahrzeugexterne Einheit des Parkhauses bestimmt auf diese Weise die aktuelle Temperatur und Luftfeuchtigkeit an der aktuellen Position des Kraftfahrzeugs und übermittelt diese Daten an das Kraftfahrzeug. Das Assistenzsystem des Kraftfahrzeugs passt anhand der aktuellen Temperatur und Luftfeuchtigkeit die Abstandsmessung der Ultraschallsensoren an.

In einem alternativen nicht von den Ansprüchen umfassten Beispiel sendet das Kraftfahrzeug der fahrzeugexternen Einheit nicht dessen Position, sondern die geplante Trajektorie. Die Verarbeitungseinheit ermittelt daraufhin die Temperatur und Luftfeuchtigkeit entlang der geplanten Trajektorie an das Kraftfahrzeug. Sofern die Trajektorie vom Assistenzsystem angepasst wird, wird die neue Trajektorie an die fahrzeugexterne Einheit übermittelt, worauf hin die Verarbeitungseinheit die Temperatur und Luftfeuchtigkeit entlang der neuen geplanten Trajektorie an das Kraftfahrzeug übermittelt. Die aktuelle Position des Kraftfahrzeugs kann alternativ mit GPS-Koordinaten an die fahrzeugexterne Einheit des Parkhauses übermittelt werden. In einer alternativen Ausführungsform findet die Ermittlung der Temperatur und der Luftfeuchtigkeit an der Position des Kraftfahrzeugs nicht in der fahrzeugexternen Einheit sondern im Assistenzsystem des Kraftfahrzeugs statt. In diesem Fall werden die Messergebnisse sowie die Position der Messstellen von der fahrzeugexternen Einheit direkt an das Assistenzsystem des Kraftfahrzeugs übermittelt. In einer vorteilhaften Weiterbildung sind die Messstellen für die Temperatur und Luftfeuchtigkeit auf typische Einbauhöhe von Ultraschallsensoren am Kraftfahrzeug im Parkhaus verbaut. Die typische Einbauhöhe kann beispielsweise zwischen 300 mm und 500 mm über dem Boden des Parkhauses liegen. Dadurch ist sichergestellt, dass die Temperatur in der Umgebung der Ultraschallsensoren optimal bestimmt werden kann. In einer weiteren Ausführungsform besteht der Bereich für die automatische Fahrzeugabgabe-und Bereitstellung aus mehreren Ebenen des Parkhauses. Es sind Messstellen auf allen Ebenen des Parkhauses inszeniert. Anhand der Position oder Trajektorie, welche vom Assistenzsystem ermittelt wird, ermittelt die fahrzeugexterne Einheit auf welcher Ebene sich das Kraftfahrzeug befindet und ermittelt die aktuelle Temperatur und/oder Luftfeuchtigkeit der Kraftfahrzeugumgebung anhand der relevanten Messstellen. Zusätzlich oder alternativ kann das Assistenzsystem des Kraftfahrzeugs anhand von Odometrie und/oder Neigungssensoren des Kraftfahrzeugs ermitteln, auf welcher Ebene des Parkhauses sich das Kraftfahrzeug befindet und diese Information an die fahrzeugexterne Einheit des Parkhauses übermitteln.

In einer alternativen Ausführungsform besteht der Bereich für die automatische Fahrzeugabgabe und -bereitstellung aus einem nicht-öffentlichen, abgegrenzten Bereich des Parkhauses. Kraftfahrzeuge können diesen Bereich nur über eine Schleuse betreten dies ist insofern vorteilhaft, da in so einem Bereich der Luftaustausch gering ist und sich somit die Temperatur und Luftfeuchtigkeit in diesem Bereich für die automatische Fahrfunktion, also das automatische Fahrmanöver oder den automatischen Manövriervorgang, nicht abrupt ändert. Zudem ist es möglich mit deutlich weniger Messstellen für die Temperatur- und Luftfeuchtigkeitsmessung zu arbeiten. Mindestens eine Messstelle befindet sich innerhalb der Schleuse, eine in der Mitte des Bereich sowie eine in der zur Schleuse weitentferntesten Stelle. Sofern weitere Zugänge zu dem öffentlich, abgegrenzten Bereich des Parkhauses, zum Beispiel über Türen, vorhanden sind, sind diese ebenfalls mit einer Messstelle auszustatten.

## Patentansprüche

1. Verfahren zum Unterstützen eines Manövriervorganges eines Kraftfahrzeugs (10) in einem Parkhaus (14), wobei sich das Kraftfahrzeug (10) innerhalb des Parkhauses (14) während des Manövriervorganges von einer Abgabestelle (12) des Parkhauses (14) zu einer vorbestimmten Position im Parkhaus (14) bewegt, wobei der Manövriervorgang des Kraftfahrzeugs (10) durch zumindest einen Sensor des Kraftfahrzeugs (10) überwacht wird, umfassend die Schritte:
- Aufbauen (S1) einer Kommunikationsverbindung (16) zwischen einer Steuereinheit des Kraftfahrzeugs (10) und einer fahrzeugexternen Einheit (18) des Parkhauses (14);
**gekennzeichnet durch** die Schritte:
- Übertragen (S4) von klimaspezifischen Messdaten, welche durch zumindest eine Messstelle des Parkhauses (14) erfasst werden, von der zumindest einen Messstelle an die fahrzeugexterne Einheit (18);
- Kalibrieren (S10) des zumindest einen Sensors des Kraftfahrzeugs in Abhängigkeit von klimaspezifischen Messdaten an der aktuellen Position des Kraftfahrzeugs, wobei
- das Parkhaus (14) mehrere Messstellen aufweist, und während des Manövriervorganges kontinuierlich, also in regelmäßigen zeitlichen Abständen, eine aktuellen Position (P) des Kraftfahrzeugs (10) bestimmt wird (S5) und
- die aktuelle Position (P) des Kraftfahrzeugs (10) an die fahrzeugexterne Einheit (18) übermittelt wird (S6), wobei der aktuellen Position (P) des Kraftfahrzeugs die durch eine oder mehrere der Messstellen erfassten klimaspezifischen Messdaten, welche sich am nächsten zu der aktuellen Position (P) befinden, zugeordnet werden (S8), um die klimaspezifischen Messdaten an der aktuellen Position des Kraftfahrzeugs zu bestimmen, oder
- die fahrzeugexterne Einheit (18) die durch die eine oder mehreren Messstellen, welche sich am nächsten zu der aktuellen Position (P) befinden, erfassten klimaspezifischen Messdaten an das Kraftfahrzeug (10) übermittelt und die Steuereinheit des Kraftfahrzeugs (10) die klimaspezifischen Messdaten der aktuellen Position (P) des Kraftfahrzeugs (10) zuordnet, um die klimaspezifischen Messdaten an der aktuellen Position des Kraftfahrzeugs zu bestimmen.

2. Verfahren nach Anspruch 1,
**dadurch gekennzeichnet, dass**
sich während des Manövriervorganges das Kraftfahrzeug (10) in einem autonomen Fahrbetrieb befindet, wobei sich während des Manövriervorganges das Kraftfahrzeug (10) autonom von der Abgabestelle (12) zu der vorbestimmten Position bewegt.

3. Verfahren nach Anspruch 1 oder 2,
**dadurch gekennzeichnet, dass**
durch die fahrzeugexterne Einheit (18) die durch die Messstellen erfassten klimaspezifischen Messdaten der aktuellen Position des Kraftfahrzeugs (10) zuordnet und an das Kraftfahrzeug (10) übermittelt.

4. Verfahren nach einem der vorhergehenden Ansprüche,
**dadurch gekennzeichnet, dass**
die vorbestimmte Position durch die fahrzeugexterne Einheit (18) bestimmt wird und an das Kraftfahrzeug (10), insbesondere die Steuereinheit des Kraftfahrzeugs (10), übermittelt wird, wobei auf Basis der vorbestimmten Position die Steuereinheit eine Trajektorie von der Abgabestelle (12) zu der vorbestimmten Position bestimmt, entlang welcher das Kraftfahrzeug (10) zu der vorbestimmten Position geführt wird.

5. Verfahren nach Anspruch 4,
**dadurch gekennzeichnet, dass**
sofern ein Objekt während des Manövriervorganges des Kraftfahrzeugs (10) von der Abgabestelle (12) bis zu der vorbestimmten Position durch den zumindest einen Sensor erfasst wird, welches sich auf der geplanten Trajektorie befindet, wird die Trajektorie um das Objekt herum, insbesondere durch die Steuereinheit des Kraftfahrzeugs (10), geplant, wobei, wenn dies nicht möglich ist, wird das Kraftfahrzeug (10) in den Stillstand abgebremst und die Störung der fahrzeugexternen Einheit (18) des Parkhauses (14) gemeldet.

6. Verfahren nach einem der vorhergehenden Ansprüche,
**dadurch gekennzeichnet, dass**
als Manövriervorgang ein Parkvorgang des Kraftfahrzeugs (10), insbesondere ein Einparkvorgang und/oder ein Ausparkvorgang, und/oder ein Rangiervorgang des Kraftfahrzeugs (10) durchgeführt wird.

7. Verfahren nach einem der vorhergehenden Ansprüche,
**dadurch gekennzeichnet, dass**
beim Kalibrieren des zumindest einen Sensors eine Empfindlichkeit des Sensor und/oder zumindest ein Parameter des Sensors, insbesondere ein Sendeschalldruck des Sensors, angepasst wird.

8. System zum Unterstützen eines Manövriervorganges eines Kraftfahrzeugs (10) in einem Parkhaus (14), wobei sich das Kraftfahrzeug (10) innerhalb des Parkhauses (14) während des Manövriervorganges von einer Abgabestelle (12) des Parkhauses (14) zu einer vorbestimmten Position im Parkhaus (14) bewegt, wobei zumindest ein Sensor des Kraftfahrzeugs (10) dazu eingerichtet ist, den Manövriervorgang des Kraftfahrzeugs (10) zu überwachen, umfassend:
- eine fahrzeugexterne Einheit (18) des Parkhauses (14);
- eine Steuereinheit des Kraftfahrzeugs (10), welche dazu eingerichtet ist, eine Kommunikationsverbindung (16) zur fahrzeugexternen Einheit (18) des Parkhauses (14) aufzubauen;
**gekennzeichnet durch**
- mehrere Messstellen des Parkhauses (14), welche jeweils dazu eingerichtet sind, klimaspezifischen Messdaten zu erfassen und an die fahrzeugexterne Einheit (18) zu übertragen; wobei
- die Steuereinheit des Kraftfahrzeugs (10) ferner dazu eingerichtet ist, den zumindest einen Sensor des Kraftfahrzeugs (10) in Abhängigkeit von klimaspezifischen Messdaten an der aktuellen Position des Kraftfahrzeugs zu kalibrieren, wobei
- das System ferner eine Erfassungseinrichtung aufweist, welche dazu eingerichtet ist, eine aktuellen Position (P) des Kraftfahrzeugs (10) kontinuierlich, also in regelmäßigen zeitlichen Abständen, zu erfassen,
wobei
- die Erfassungseinrichtung ferner dazu eingerichtet ist, die erfasste aktuelle Position (P) des Kraftfahrzeugs (10) an die fahrzeugexterne Einheit (18) zu übertragen, wobei der aktuellen Position (P) des Kraftfahrzeugs die durch eine oder mehrere Messstellen erfassten klimaspezifischen Messdaten, welche sich am nächsten zu der aktuellen Position (P) befinden, zugeordnet werden, um die klimaspezifischen Messdaten an der aktuellen Position des Kraftfahrzeugs zu bestimmen, oder
- die fahrzeugexterne Einheit (18) dazu eingerichtet ist, die durch eine oder mehrere der Messstellen, welche sich am nächsten zu der aktuellen Position (P) befinden, erfassten klimaspezifischen Messdaten an das Kraftfahrzeug (10) zu übermitteln und die Steuereinheit des Kraftfahrzeugs (10) dazu eingerichtet ist, die klimaspezifischen Messdaten der aktuellen Position (P) des Kraftfahrzeugs (10) zuzuordnen, um die klimaspezifischen Messdaten an der aktuellen Position des Kraftfahrzeugs zu bestimmen.

9. System nach Anspruch 8,
**dadurch gekennzeichnet, dass**
die zumindest eine Messstelle zumindest ein Temperarturmessgerät (20) und/oder zumindest ein Feuchtigkeitsmessgerät (22) aufweist.

10. System nach einem der Ansprüche 8 oder 9,
**dadurch gekennzeichnet, dass**
sich die Abgabestelle (12) in einem vom übrigen Parkhaus (14) abgegrenzten Bereich des Parkhauses (14) befindet, wobei das Parkhaus (14) als ein zur Umgebung geschlossenes Parkhaus (14) ausgebildet ist, wobei sich die Messstellen innerhalb des abgegrenzten Bereichs befinden.

11. System nach einem der Ansprüche 8 bis 10,
**dadurch gekennzeichnet, dass**
die Erfassungseinrichtung zum Erfassen der aktuellen Position des Kraftfahrzeugs (10) einen Odometriesensor und/oder einen Lenkradwinkelsensor aufweist.

12. System nach einer der Ansprüche 8 bis 11,
**dadurch gekennzeichnet, dass**
die Erfassungseinrichtung ferner dazu eingerichtet ist, zu bestimmen in welcher Ebene des Parkhauses (14) sich das Kraftfahrzeug (10) befindet, wobei die Erfassungseinrichtung zum Bestimmen der Ebene des Parkhauses (14) einen Neigungssensor des Kraftfahrzeugs (10) aufweist.

13. System nach einem der Ansprüche 8 bis 12,
**dadurch gekennzeichnet, dass**
der zumindest eine Sensor als Ultraschallsensor ausgebildet ist, wobei der zumindest eine Sensor während des Manövriervorganges des Kraftfahrzeugs (10) von der Abgabestelle bis zu der vorbestimmten Position dazu eingerichtet ist, Objekte in einer Umgebung des Kraftfahrzeugs (10) zu erfassen.

14. System nach einem der Ansprüche 8 bis 13,
**dadurch gekennzeichnet, dass**
es sich bei der Abgabestelle (12) um eine Position, an der ein Fahrer des Kraftfahrzeugs (10) das Kraftfahrzeug (10) abgestellt hat oder aus dem Kraftfahrzeug (10) ausgestiegen ist, oder eine vorbestimmte Parkposition oder um eine Parklücke oder um einen Stellplatz im Parkhaus (14) handelt und, dass es sich bei der vorbestimmten Position um eine Parklücke oder einen Stellplatz oder von der Abgabestelle verschiedene Position im Parkhaus (14), insbesondere einen Einladebereich oder einen Ausladebereich oder eine weitere Parkposition oder eine Position, an welcher der Fahrer des Kraftfahrzeugs (10) wieder dem Kraftfahrzeug (10) zusteigt, oder eine Ladeposition, an der sich eine Ladestation für das Kraftfahrzeug (10) befindet, handelt.

15. System nach einem der Ansprüche 8 bis 14,
**dadurch gekennzeichnet, dass**
das Parkhaus (14) mehrere Ebenen aufweist, wobei Messstellen auf allen Ebenen des Parkhauses (14) inszeniert sind, wobei anhand der Position oder einer Trajektorie die fahrzeugexterne Einheit (18) dazu eingerichtet ist, zu ermitteln auf welcher Ebene sich das Kraftfahrzeug (10) befindet und eine aktuelle Temperatur und/oder Luftfeuchtigkeit der Kraftfahrzeugumgebung als die klimaspezifischen Messdaten anhand der relevanten Messstellen zu ermitteln.

## Claims

1. Method for supporting a maneuver of a motor vehicle (10) in a parking garage (14), wherein during the maneuver the motor vehicle (10) moves inside the parking garage (14) from a delivery point (12) of the parking garage (14) to a predetermined position in the parking garage (14), wherein the maneuver of the motor vehicle (10) is monitored by at least one sensor of the motor vehicle (10), comprising the steps:
- establishing (S1) a communication link (16) between a control unit of the motor vehicle (10) and a unit (18) of the parking garage (14) external to the vehicle;
**characterized by** the steps of:
- transmitting (S4) climate-specific measurement data, which are detected by at least one measuring point of the parking garage (14), from the at least one measuring point to the unit (18) external to the vehicle;
- calibrating (S10) the at least one sensor of the motor vehicle depending on climate-specific measurement data at the current position of the motor vehicle, wherein
- the parking garage (14) has a plurality of measuring points, and during the maneuver a current position (P) of the motor vehicle (10) is determined continuously, that is to say at regular time intervals (S5), and
- the current position (P) of the motor vehicle (10) is transmitted (S6) to the unit (18) external to the vehicle, wherein the climate-specific measurement data which are closest to the current position (P), said data being detected by one or more of the measuring points, are associated (S8) with the current position (P) of the vehicle in order to determine the climate-specific measurement data at the current position of the motor vehicle, or
- the unit (18) external to the motor vehicle transmits the climate-specific measurement data, said data being detected by the one or more measuring points closest to the current position (P), to the motor vehicle (10), and the control unit of the motor vehicle (10) associates the climate-specific measurement data with the current position (P) of the motor vehicle (10) in order to determine the climate-specific measurement data at the current position of the motor vehicle.

2. Method according to claim 1,
**characterized in that**
during the maneuver, the motor vehicle (10) is in an autonomous driving mode, wherein the motor vehicle (10) moves autonomously from the delivery point (12) to the predetermined position during the maneuver.

3. Method according to claim 1 or 2,
**characterized in that**
the climate-specific measurement data detected by the measuring points are associated with the current position of the motor vehicle (10) and transmitted to the motor vehicle (10) by the unit (18) external to the vehicle.

4. Method according to one of the preceding claims,
**characterized in that**
the predetermined position is determined by the unit (18) external to the vehicle and transmitted to the motor vehicle (10), in particular the control unit of the motor vehicle (10), wherein on the basis of the predetermined position the control unit determines a trajectory from the delivery point (12) to the predetermined position along which the motor vehicle (10) is driven to the predetermined position.

5. Method according to claim 4,
**characterized in that**
insofar as an object located on the planned trajectory is detected by the at least one sensor during the maneuver of the motor vehicle (10) from the delivery point (12) to the predetermined position, the trajectory is planned around the object, in particular by the control unit of the motor vehicle (10), wherein, if this is not possible, the motor vehicle (10) is braked to a standstill and the stoppage is reported to the unit (18) of the parking garage (14) external to the vehicle.

6. Method according to one of the preceding claims,
**characterized in that**
a parking process of the motor vehicle (10), in particular a process of entering and/or leaving a parking space, and/or a switching process of the motor vehicle (10) is implemented as a maneuver.

7. Method according to one of the preceding claims,
**characterized in that**
a sensitivity of the sensor and/or at least one parameter of the sensor, in particular an acoustic transmission pressure of the sensor, is adjusted upon calibrating the at least one sensor.

8. System for supporting a maneuver of a motor vehicle (10) in a parking garage (14), wherein during the maneuver the motor vehicle (10) moves inside the parking garage (14) from a delivery point (12) of the parking garage (14) to a predetermined position in the parking garage (14), wherein at least one sensor of the motor vehicle (10) is configured to monitor the maneuver of the motor vehicle (10), comprising:
- a unit (18) of the parking garage (14) external to the vehicle;
- a control unit of the motor vehicle (10) which is configured to establish a communication link (16) to the unit (18) of the parking garage (14) external to the vehicle;
**characterized by**
- a plurality of measuring points of the parking garage (14) which are respectively configured to detect climate-specific measurement data and transmit said data to the unit (18) external to the vehicle; wherein
- the control unit of the motor vehicle (10) is also configured to calibrate the at least one sensor of the motor vehicle (10) depending on climate-specific measurement data at the current position of the motor vehicle, wherein
- the system further comprises a detection device which is configured to detect a current position (P) of the motor vehicle (10) continuously, that is to say at regular time intervals, wherein
- the detection device is further configured to transmit the detected current position (P) of the motor vehicle (10) to the unit (18) external to the vehicle, wherein the climate-specific measurement data which are closest to the current position (P), said data being detected by one or more measuring points, are associated with the current position (P) of the vehicle in order to determine the climate-specific measurement data at the current position of the motor vehicle, or
- the unit (18) external to the motor vehicle is configured to transmit to the motor vehicle (10) the climate-specific measurement data detected by one or more of the measuring points closest to the current position (P), and the control unit of the motor vehicle (10) is configured to associate the climate-specific measurement data with the current position (P) of the motor vehicle (10) in order to determine the climate-specific measurement data at the current position of the motor vehicle.

9. System according to claim 8,
**characterized in that**
the at least one measuring point comprises at least one temperature measuring device (20) and/or at least one moisture measuring device (22).

10. System according to one of claims 8 or 9,
**characterized in that**
the delivery point (12) is located in a region of the parking garage (14) delimited from the remainder of the parking garage (14), wherein the parking garage (14) is designed as a parking garage (14) closed from the surroundings, wherein the measuring points are located within the delimited region.

11. System according to one of claims 8 through 10,
**characterized in that**
the detection device for detecting the current position of the motor vehicle (10) comprises an odometry sensor and/or a steering wheel angle sensor.

12. System according to one of claims 8 through 11,
**characterized in that**
the detection device is further configured to determine on which level of the parking garage (14) the motor vehicle (10) is located, wherein the detection device for determining the level of the parking garage (14) has an inclination sensor of the motor vehicle (10).

13. System according to one of claims 8 through 12,
**characterized in that**
the at least one sensor is embodied as an ultrasonic sensor, wherein, during the maneuver of the motor vehicle (10) from the delivery point to the predetermined position, the at least one sensor is configured to detect objects in the surroundings of the motor vehicle (10).

14. System according to one of claims 8 through 13,
**characterized in that**
the delivery point is a position (12) at which a driver of the motor vehicle (10) has parked the motor vehicle (10) or has exited the motor vehicle (10), or is a predetermined parking position or a parking gap or a parking space in the parking garage (14); and **in that** the predetermined position is a parking gap or a parking space or a position in the parking garage (14) other than the delivery point, in particular a loading area or an unloading area, or a further parking position, or a position at which the driver of the motor vehicle (10) enters the motor vehicle (10) again, or a charging position at which a charging station for the motor vehicle (10) is located.

15. System according to one of claims 8 through 14,
**characterized in that**
the parking garage (14) has a plurality of levels, wherein measuring points are staged on all levels of the parking garage (14), wherein the unit (18) external to the vehicle is configured, on the basis of the position or a trajectory, to determine on which level the motor vehicle (10) is located, and to determine a current temperature and/or humidity of the motor vehicle surroundings as the climate-specific measurement data on the basis of the relevant measuring points.

## Revendications

1. Procédé d'aide à un processus de manœuvre d'un véhicule automobile (10) dans un garage en étages (14), dans lequel le véhicule automobile (10) se déplace à l'intérieur du garage en étages (14) lors du processus de manœuvre d'un point de stationnement (12) du garage en étages (14) vers une position prédéterminée dans le garage en étages (14), dans lequel le processus de manœuvre du véhicule automobile (10) est surveillé par au moins un capteur du véhicule automobile (10), comprenant les étapes suivantes :
- l'établissement (S1) d'une liaison de communication (16) entre une unité de commande du véhicule automobile (10) et une unité (18) externe au véhicule du garage en étages (14) ;
**caractérisé par** les étapes suivantes :
- la transmission (S4) de données de mesure spécifiques au climat, lesquelles sont enregistrées par au moins un point de mesure du garage en étages (14), de l'au moins un point de mesure vers l'unité (18) externe au véhicule ;
- l'étalonnage (S10) de l'au moins un capteur du véhicule automobile en fonction des données de mesure spécifiques au climat à la position actuelle du véhicule automobile, dans lequel
- le garage en étages (14) comporte plusieurs points de mesure et, lors du processus de manœuvre, en continu, c'est-à-dire à intervalles temporels réguliers, une position (P) actuelle du véhicule automobile (10) est déterminée (S5) et
- la position (P) actuelle du véhicule automobile (10) est transmise à l'unité (18) externe au véhicule (S6), dans lequel les données de mesure spécifiques au climat, enregistrées par un ou plusieurs des points de mesure les plus proches de la position (P) actuelle sont affectées (S8) à la position (P) actuelle du véhicule automobile, pour déterminer les données de mesure spécifiques au climat à la position actuelle du véhicule automobile ou
- l'unité (18) externe au véhicule transmet les données de mesure spécifiques au climat enregistrées par le ou les points de mesure, les plus proches de la position (P) actuelle, au véhicule automobile (10) et l'unité de commande du véhicule automobile (10) affecte les données de mesure spécifiques au climat à la position (P) actuelle du véhicule automobile (10) pour déterminer les données de mesure spécifiques au climat à la position actuelle du véhicule automobile.

2. Procédé selon la revendication 1,
**caractérisé en ce que**
lors du processus de manœuvre, le véhicule automobile (10) est dans un mode de fonctionnement de conduite autonome, dans lequel le véhicule automobile (10), lors du processus de manœuvre, se déplace de manière autonome du point de stationnement (12) à la position prédéterminée.

3. Procédé selon la revendication 1 ou 2,
**caractérisé en ce que**
l'unité (18) externe au véhicule attribue les données de mesure spécifiques au climat enregistrées par les points de mesure à la position actuelle du véhicule automobile (10) et les transmet au véhicule automobile (10).

4. Procédé selon l'une quelconque des revendications précédentes,
**caractérisé en ce que**
la position prédéterminée est déterminée par l'unité (18) externe au véhicule et est transmise au véhicule automobile (10), en particulier à l'unité de commande du véhicule automobile (10), dans lequel, en fonction de la position prédéterminée, l'unité de commande détermine une trajectoire du point de stationnement (12) à la position prédéterminée, le long de laquelle le véhicule automobile (10) est guidé vers la position prédéterminée.

5. Procédé selon la revendication 4,
**caractérisé en ce que**
si un objet est détecté, lors du processus de manœuvre du véhicule automobile (10) du point de stationnement (12) à la position prédéterminée par l'au moins un capteur, lequel se trouve sur la trajectoire prévue, la trajectoire est planifiée autour de l'objet, en particulier par l'unité de commande du véhicule automobile (10), dans lequel, si cela n'est pas possible, le véhicule automobile (10) est freiné de manière à être immobilisé et la perturbation de l'unité (18) externe au véhicule du garage en étages (14) est signalée.

6. Procédé selon l'une quelconque des revendications précédentes,
**caractérisé en ce que**
en tant que processus de manœuvre, un processus de stationnement du véhicule automobile (10), en particulier un processus d'entrée dans la place de stationnement et/ou un processus de sortie de la place de stationnement et/ou un processus de manœuvre de stationnement du véhicule automobile (10) est effectué.

7. Procédé selon l'une quelconque des revendications précédentes,
**caractérisé en ce que**
lors de l'étalonnage de l'au moins un capteur, une sensibilité du capteur et/ou au moins un paramètre du capteur, en particulier une pression acoustique de transmission du capteur, est ajusté.

8. Système d'aide à un processus de manœuvre d'un véhicule automobile (10) dans un garage en étages (14), dans lequel le véhicule automobile (10) à l'intérieur du garage en étages (14) lors du processus de manœuvre se déplace d'un point de stationnement (12) du garage en étages (14) vers une position prédéterminée dans le garage en étages (14), dans lequel au moins un capteur du véhicule automobile (10) est conçu pour surveiller le processus de manœuvre du véhicule automobile (10), comprenant :
- une unité (18) externe au véhicule du garage en étages (14) ;
- une unité de commande du véhicule automobile (10), laquelle est conçue pour établir une liaison de communication (16) avec l'unité (18) externe au véhicule du garage en étages (14) ;
**caractérisé par**
- plusieurs points de mesure du garage en étages (14), lesquels sont respectivement conçus pour enregistrer des données de mesure spécifiques au climat et pour les transmettre à l'unité (18) externe au véhicule ; dans lequel
- l'unité de commande du véhicule automobile (10) est en outre conçue pour étalonner l'au moins un capteur du véhicule automobile (10) en fonction des données de mesure spécifiques au climat à la position actuelle du véhicule automobile, dans lequel
- le système comporte en outre un dispositif de détection, lequel est conçu pour détecter une position (P) actuelle du véhicule automobile (10) en continu, c'est-à-dire à intervalles temporels réguliers, dans lequel
- le dispositif de détection est en outre conçu pour transmettre la position (P) actuelle détectée du véhicule automobile (10) à l'unité (18) externe au véhicule, dans lequel les données de mesure spécifiques au climat, enregistrées par au moins un point de mesure le plus proche de la position (P) actuelle sont affectées à la position (P) actuelle du véhicule automobile, pour déterminer les données de mesure spécifiques au climat à la position actuelle du véhicule automobile ou
- l'unité (18) externe au véhicule est conçue pour transmettre les données de mesure spécifiques au climat enregistrées par l'au moins un point de mesure le plus proche de la position (P) actuelle au véhicule automobile (10) et l'unité de commande du véhicule automobile (10) est conçue pour affecter les données de mesure spécifiques au climat à la position (P) actuelle du véhicule automobile (10) pour déterminer les données de mesure spécifiques au climat à la position actuelle du véhicule automobile.

9. Système selon la revendication 8,
**caractérisé en ce que**
l'au moins un point de mesure comporte au moins un dispositif de mesure de température (20) et/ou au moins un dispositif de mesure d'humidité (22).

10. Système selon l'une quelconque des revendications 8 ou 9,
**caractérisé en ce que**
le point de stationnement (12) se trouve dans une zone du garage en étages (14) délimitée du reste du garage en étages (14), dans lequel le garage en étages (14) est conçu sous la forme d'un garage en étages (14) fermé par rapport à l'environnement, dans lequel les points de mesure sont situés dans la zone délimitée.

11. Système selon l'une quelconque des revendications 8 à 10,
**caractérisé en ce que**
le dispositif de détection, pour détecter la position actuelle du véhicule automobile (10), comporte un capteur d'odométrie et/ou un capteur d'angle du volant.

12. Système selon l'une quelconque des revendications 8 à 11,
**caractérisé en ce que**
le dispositif de détection est en outre conçu pour déterminer à quel niveau du garage en étages (14) se trouve le véhicule automobile (10), dans lequel le dispositif de détection, pour déterminer le niveau du garage en étages (14), comporte un capteur d'inclinaison du véhicule automobile (10).

13. Système selon l'une quelconque des revendications 8 à 12,
**caractérisé en ce que**
l'au moins un capteur est conçu sous la forme d'un capteur à ultrasons, dans lequel l'au moins un capteur, lors du processus de manœuvre du véhicule automobile (10) du point de stationnement vers la position prédéterminée, est conçu pour détecter des objets dans un environnement du véhicule automobile (10).

14. Système selon l'une quelconque des revendications 8 à 13,
**caractérisé en ce que**
le point de stationnement (12) est une position à laquelle un conducteur du véhicule automobile (10) a garé le véhicule automobile (10) ou est descendu du véhicule automobile (10) ou une position de stationnement prédéterminée ou un espace de stationnement ou une place de stationnement dans le garage en étages (14) et, que la position prédéterminée est un espace de stationnement ou une place de stationnement ou une position différente du point de stationnement dans le garage en étages (14), en particulier une zone de chargement ou une zone de déchargement ou une autre position de stationnement ou une position à laquelle le conducteur du véhicule automobile (10) remonte dans le véhicule automobile (10) ou une position de chargement à laquelle se trouve une station de charge pour le véhicule automobile (10).

15. Système selon l'une quelconque des revendications 8 à 14,
**caractérisé en ce que**
le garage en étages (14) comporte plusieurs niveaux, dans lequel des points de mesure sont étagés à tous les niveaux du garage en étages (14), dans lequel, en fonction de la position ou d'une trajectoire, l'unité (18) externe au véhicule est conçue pour déterminer à quel niveau se trouve le véhicule automobile (10) et pour déterminer une température et/ou une humidité actuelles de l'environnement du véhicule automobile en tant que données de mesure spécifiques au climat en fonction des points de mesure appropriés.
